# EUROPÄISCHE PATENTSCHRIFT

(11) **EP 3 176 560 B1**
(45) Veröffentlichungstag und Bekanntmachung des Hinweises auf die Patenterteilung: **19.06.2019**
(21) Anmeldenummer: 16191863.6
(22) Anmeldetag: 30.09.2016
(51) Int. Cl.: G01M 5/00, F01D 5/12, B64D 27/10, F01D 5/14, F01D 5/22, F04D 29/32, B64F 5/60, F01D 21/00, F01D 5/02

(54) **VERFAHREN ZUR PRÜFUNG EINER LAUFSCHAUFELEINHEIT**
METHOD OF TESTING A TURBINE BLADE
PROCEDE DE TEST UNE AUBE DE TURBINE

(30) Priorität: 04.12.2015 DE 102015224375
(43) Veröffentlichungstag der Anmeldung: 07.06.2017
(73) Patentinhaber: MTU Aero Engines AG, 80995 München (DE)
(72) Erfinder: Dopfer, Manfred, 85716 Unterschleissheim (DE); Pernleitner, Martin, 85221 Dachau (DE); Schütz, Gottfried, 82327 Tutzing (DE)

(56) Entgegenhaltungen:
- US-A- 5 238 366
- US-A1- 2010 288 052
- US-A1- 2015 118 031

## Beschreibung

Die vorliegende Erfindung betrifft ein Verfahren zur Prüfung einer Laufschaufeleinheit einer Gasturbine, insbesondere Fluggasturbine, wobei die Laufschaufeleinheit ein radial außen angeordnetes Außendeckband umfasst, das materialschlüssig, insbesondere einstückig mit einer sich radial nach innen anschließenden Laufschaufel verbunden ist, wobei die Laufschaufel einen Strömungsquerschnitt aufweist mit einer Druckseite und einer Saugseite, sowie mit einer axialen Vorderkante und einer axialen Hinterkante, welche die Druckseite und die Saugseite miteinander verbinden.

In der vorliegenden Anmeldung sind Richtungsangaben wie "Axial-" bzw. "axial", "Radial-" bzw. "radial" und "Umfangs-" grundsätzlich auf die Maschinenachse der Gasturbine bezogen zu verstehen, sofern sich aus dem Kontext nicht explizit oder implizit etwas anderes ergibt. Ebenso sind die Begriffe "vorne" bzw. "Vorder-" und "hinten" bzw. "Hinter-" auf die Richtung der Hauptströmung in der Strömungsmaschine zu versehen, sofern sich aus dem Kontext nicht explizit oder implizit etwas anderes ergibt.

Prüfungsverfahren für Laufschaufeln einer Gasturbine kommen insbesondere bei der Herstellung zur Qualitätssicherung, aber auch bei Wartungs- bzw- Servicearbeiten zum Einsatz. Dabei werden insbesondere bei Fluggasturbinen an den Laufschaufeleinheiten sogenannten Pretwist-Messungen durchgeführt. Um derartige Messungen und Überprüfungen durchführen zu können, sind an der Laufschaufeleinheit Anlageflächen vorzusehen, die eine referenzierte Positionierung der Laufschaufeleinheit in einer entsprechenden Messvorrichtung ermöglichen. Bisher wurden solche Anlageflächen an dem Außendeckband an einer axial hinteren Seite erzeugt, die sehr nahe zu der der axialen Hinterkante der Laufschaufel liegt. Entsprechend ist bei einer solchen Bereitstellung einer Anlagefläche das Problem aufgetreten, dass beim Ausbilden der Anlagefläche die Hinterkante in Mitleidenschaft gezogen worden ist, insbesondere beschädigt worden ist. Eine Beschädigung der Vorderkante oder der Hinterkante der Laufschaufel ist einerseits aufwändig zum Reparieren und andererseits, falls die Beschädigung nicht bemerkt werden sollte, wirkt sich eine beschädigte Vorder- oder Hinterkante nachteilig auf den Wirkungsgrad der Gasturbine aus.

Aus der US 2010/0288052 A1 ist ein Prüfverfahren für Spannungen in Laufschaufelenden aufgrund von Zentrifugalkräften bekannt.

Aufgabe der Erfindung ist es, die oben genannten Nachteile zu vermeiden.

Diese Aufgabe wird gelöst durch die Gegenstände der unabhängigen Ansprüche.

Das Verfahren umfasst die folgenden Schritte:
Bereitstellen einer Laufschaufeleinheit;
Bearbeiten des Außendeckbandes an seiner axial vorderen oder axial hinteren Seite, wobei zur Bearbeitung diejenige Seite ausgewählt wird, welche zu der benachbarten axialen Vorderkante oder axialen Hinterkante der Laufschaufel den größeren Abstand aufweist, wobei durch die Bearbeitung der ausgewählten Seite eine Anlagefläche erzeugt wird;
Bereitstellen der Laufschaufeleinheit mit Anlagefläche in einer Messvorrichtung, insbesondere einer Messvorrichtung zur Bestimmung einer Biegung oder Drehung der Laufschaufeleinheit um eine Achse, insbesondere um eine Fädelachse oder eine Längsachse der Laufschaufel.

Durch das vorgeschlagene Verfahren können Laufschaufeleinheiten für einen bestimmten Gasturbinentyp jeweils optimal bearbeitet werden, um eine Anlagefläche für eine nachfolgende Messung, insbesondere eine Pretwist-Messung, erzeugen zu können, wobei das Risiko der Beschädigung der Vorderkante oder der Hinterkante der Laufschaufel minimiert werden kann.

Hinsichtlich der Auswahl der axialen Seite des Außendeckbandes ist es bevorzugt, dass die Anlagefläche an der axial vorderen Seite des Außendeckbandes erzeugt wird. In der Regel ist ein axialer Überstand des Außendeckbandes an der axialen Vorderseite größer als der axiale Überstand auf der axialen Hinterseite, so dass beim Erzeugen einer Anlagefläche an der axialen Vorderseite des Außendeckbandes das Risiko der Beschädigung der Laufschaufel, insbesondere ihrer Vorderkante, minimiert werden kann.

Das Bearbeiten des Außendeckbandes wird bevorzugt durch ein spanendes Verfahren, insbesondere Fräsen oder Schleifen, durchgeführt.

Es wird weiterbildend vorgeschlagen, dass das Bearbeiten des Außendeckbandes so durchgeführt wird, dass die Anlagefläche in axialer Richtung einen Abstand von der axialen Vorderkante der Laufschaufel aufweist. Mit anderen Worten wird ein axialer Überstand des Außendeckbandes über die Vorderkante bzw. die Hinterkante des Laufschaufel nur teilweise abgetragen, so dass das Risiko einer Beschädigung der Laufschaufel weiter verringert werden kann.

Ferner wird vorgeschlagen, dass die nicht ausgewählte Seite des Außendeckbands unbearbeitet bleibt. Im bevorzugten Fall der Erzeugung der Anlagefläche auf der axiale vorderen Seite des Außendeckbandes, bleibt die axial hintere Seite des Außendeckbandes unbearbeitet. Insbesondere kann die in der Regel gegossene Laufschaufeleinheit an der nicht-bearbeiteten Seite des Außendeckbandes ihre ursprüngliche Gussoberfläche aufweisen.

Das Verfahren kann bei der Herstellung einer Gasturbine oder/und bei der Wartung einer Gasturbine eingesetzt werden.

Die obige Aufgabe wird ferner gelöst durch eine Laufschaufeleinheit mit einem radial außen angeordneten Außendeckband, das materialschlüssig, insbesondere einstückig mit einer sich radial nach innen anschließenden Laufschaufel verbunden ist, wobei die Laufschaufel einen Strömungsquerschnitt aufweist mit einer Druckseite und einer Saugseite, sowie mit einer axialen Vorderkante und einer axialen Hinterkante, welche die Druckseite und die Saugseite miteinander verbinden, wobei das Außendeckband an seiner axial vorderen oder axial hinteren Seite eine durch spanende Bearbeitung erzeugte Anlagefläche aufweist, wobei die Anlagefläche an derjenigen Seite ausgebildet ist, welche von einer benachbarten axialen Vorderkante oder axialen Hinterkante der Laufschaufel den größeren Abstand aufweist.

Dabei ist es bevorzugt, dass die Anlagefläche in der axial vorderen Seite des Außendeckbandes ausgebildet ist.

Weiterbildend wird vorgeschlagen, dass die Laufschaufel radial innen mit einem Fußabschnitt verbunden ist, insbesondere materialschlüssig verbunden ist, wobei der Fußabschnitt vorzugweise als Tannenbaumfuß ausgebildet ist, und wobei der Fußabschnitt dazu eingerichtet ist, die Laufschaufeleinheit mit einer Rotorscheibe der Gasturbine zu verbinden, insbesondere durch Formschluss zu verbinden.

Die Erfindung betrifft ferner auch eine Gasturbine, insbesondere Fluggasturbine mit wenigstens einer Verdichterstufe und wenigstens einer Turbinenstufe, wobei die Turbinenstufe einen Turbinenrotor mit mehreren in Umfangsrichtung nebeneinander angeordneten Laufschaufeleinheiten aufweist, und wobei die Verdichterstufe einen Verdichterrotor mit mehreren in Umfangrichtung nebeneinander angeordneten Laufschaufeleinheiten aufwiest, dadurch gekennzeichnet, dass der Turbinenrotor oder/und der Verdichterrotor wenigstens eine Laufschaufeleinheit umfasst, die eines der oben genannten Merkmale aufweist.

Nachfolgend wird die Erfindung unter Bezugnahme auf die anliegenden Figuren beispielhaft und nicht einschränkend beschrieben.

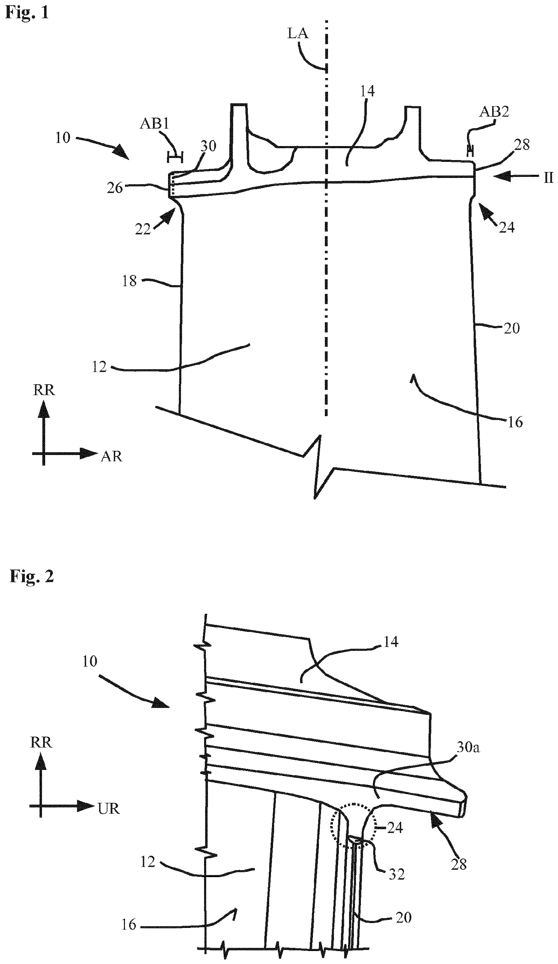

Fig. 1 zeigt in einer vereinfachten schematischen Darstellung einen Teil einer Laufschaufeleinheit mit einem radial äußeren Außendeckband und einer Laufschaufel. Fig. 2 zeigt eine vereinfachte schematische Perspektivdarstellung auf eine axiale Hinterkante einer Laufschaufel, wobei die Hinterkante beschädigt ist.

Fig. 1 zeigt in einer Draufsicht aus Umfangrichtung eine Laufschaufeleinheit 10 mit einer Laufschaufel 12 und einem mit der Laufschaufel 12 verbundenen, in Radialrichtung RR außen angeordneten Außendeckband 14. Die Laufschaufel 12 weist ein Strömungsprofil auf mit einer in der gewählten Darstellung nicht sichtbaren Saugseite und einer Druckseite 16. Die Saugseite und die Druckseite 16 sind durch eine axiale Vorderkante 18 und eine axiale Hinterkante 20 miteinander verbunden.

Die Vorderkante 18 und die Hinterkante 20 gehen bei 22 bzw. 24 in das Außendeckband 14, insbesondere in eine jeweilige Vorderseite 26 bzw. Hinterseite 28 über, wobei das Außendeckband 14 mit seiner Vorderseite 26 bzw. Hinterseite 28 in Axialrichtung AR etwas über die Vorderkante 18 bzw. die Hinterkante 20 vorsteht, was durch die beiden Abstandslinien AB1 und AB2 angedeutet ist. Aus der Darstellung ist ersichtlich, dass der Abstand AB1 größer ist als der Abstand AB2. Um die Laufschaufeleinheit 10 für eine zum Beispiel im Rahmen von Wartungsarbeiten oder zur Qualitätssicherung bei der Herstellung durchzuführende Messung vorzubereiten, insbesondere für eine sogenannte Pretwist-Messung, wird an derjenigen Seite des Außendeckbandes 14, die einen größeren Abstand zu der ihr benachbarten Kante der Laufschaufel 12 aufweist, etwas Material abgetragen, um eine vorzugsweise ebene Anlage- bzw. Referenzfläche 30 zu erzeugen. Die Anlagefläche 30 ist in der Darstellung der Fig. 1 punktiert angedeutet mit einem Abstand zur Vorderseite 26. Es wird darauf hingewiesen, dass die Darstellung der Anlagefläche 30 aus darstellerischen Gründen mit deutlicher Distanz zur Vorderseite 26 dargestellt ist, auch wenn der Materialabtrag an der Vorderseite 26 zum Erzeugen einer Anlagefläche 30 in Realität in einem Bereich von (Sub-)Millimetern liegen kann. Die durch spanende Verfahren (Materialabtrag an der Vorderseite 26) erzeugte Anlagefläche 30 weist selbst immer noch einen Abstand zur Vorderkante 18 der Laufschaufel 12 auf, der etwas kleiner ist als der Abstand AB1, aber in der Regel immer noch größer ist als der Abstand AB2. Mit LA ist eine Längsachse der Laufschaufeleinheit 10 angedeutet.

Fig. 2 zeigt eine vereinfachte schematische Teilperspektive auf die Hinterkante 20 einer Laufschaufeleinheit 10 nach einer bisher bekannten Bearbeitung der Hinterseite 28 des Außendeckbandes 14, wobei die Blickrichtung in axialer Richtung AR entsprechend etwa dem Pfeil II der Fig. 1 gewählt ist. Durch Materialabtrag an der Hinterseite 28 ist eine Anlagefläche 30a erzeugt worden, wobei auch die Hinterkante 20 der Laufschaufel 12 in ihrem in Radialrichtung RR oberen Bereich beschädigt worden ist. Die Beschädigung der Hinterkante 20 ist durch die angedeutete Stufe 32 in dem gestrichelt eingekreisten Übergangsbereich 24 zwischen Hinterkante 20 und Hinterseite 28 ersichtlich. Eine solche ungewollte Beschädigung der Hinterkante 20 kann beim Beschleifen der Hinterseite 28 des Außendeckbands 14 in der Praxis bei einer bekannten Laufschaufel bereits vorkommen, nämlich insbesondere dann, wenn sich Fertigungstoleranzen bei der Herstellung der in der Regel gegossenen Laufschaufel unglücklich aufaddiert haben.

Um derartige Beschädigungen einer Vorderkante 18 oder eine Hinterkante 20 einer Laufschaufel zu vermeiden, wird das hier vorgestellte Verfahren vorgeschlagen, bei dem der Materialabtrag an derjenigen Seite des Außendeckbandes erfolgen soll, die einen größeren Abstand zu ihrer benachbarten Laufschaufelkante aufweist. Das vorgeschlagene Verfahren stellt eine Abkehr von der bisherigen Praxis dar, die Anlagefläche immer an der gleichen Seite, in der Regel der Hinterseite 28 des Außendeckbandes 14 der Laufschaufeleinheit 10 vorzusehen.

Bei dem vorgeschlagenen Verfahren kann eine Laufschaufeleinheit 10 bereitgestellt werden. Dies kann beispielsweise bei der Neuherstellung nach dem Gießen der Laufschaufeleinheit erfolgen. Bei der bereitgestellten, neu hergestellten Laufschaufeleinheit 10 wird bestimmt, welche Seite 26, 28 des Außendeckbands 14 den größeren Abstand zur korrespondierenden Kante 18, 20 der Laufschaufel aufweist. An derjenigen Seite, in Fig. 1 der Vorderseite 26, die den größeren Abstand (AB1) aufweist, wird dann die Anlagefläche 30 ausgebildet, insbesondere durch spanende Verfahren wie Fräsen oder Schleifen. Durch das Erzeugen der Anlagefläche 30 wird die Laufschaufeleinheit 10 für weitere Prüfungen bzw. Untersuchungen in einer Messvorrichtung vorbereitet, wobei die Messvorrichtung insbesondere dazu eingerichtet ist, eine Biegung oder eine Verdrehung der Laufschaufel 10 um eine bestimmte Achse, wie etwa die Fädelachse oder die Längsachse zu bestimmen. Die Anlagefläche 30 ist dabei als ebene Fläche ausgebildet und weist keine aufgrund des Betriebs entstandene Verformungen, Ablagerungen oder dergleichen auf, so dass mittels der Anlagefläche 30 die erforderlichen Messungen an der Laufschaufeleinheit 10 bzw. der Laufschaufel 12 durchgeführt werden können.

Alternativ, kann die Bereitstellung einer Laufschaufeleinheit 10 beispielsweise auch dadurch erfolgen, dass ein Laufschaufelkranz einer Turbinenstufe oder einer Verdichterstufe einer Gasturbine, insbesondere Fluggasturbine, zu Wartungszwecken demontiert wird und die einzelnen Laufschaufeleinheiten ausgebaut werden. An diesen Laufschaufeleinheiten sind in der Regel entsprechende Anlage- bzw. Referenzflächen bereits vorgesehen. Die benutzten Laufschaufeleinheiten werden dann für weitere Prüfungen bzw. Untersuchungen in einer Messvorrichtung vorbereitet. Dies kann insbesondere folgende Schritt umfassen: eine Reinigung und gegebenenfalls eine Überprüfung bzw. Nachbearbeitung der Anlagefläche. Eine Reinigung bzw. Nachbearbeitung der Anlagefläche ist aber nicht in jedem Fall notwendig. Wie bereits oben für eine neu hergestellte Laufschaufeleinheit erwähnt, ist die Messvorrichtung insbesondere dazu eingerichtet, eine Biegung oder eine Verdrehung der Laufschaufel 10 um eine bestimmte Achse, wie etwa die Fädelachse oder die Längsachse zu bestimmen. Dabei kann insbesondere bestimmt werden, ob durch den Betrieb der Gasturbine ein Twistverlust an einer untersuchten Laufschaufeleinheit aufgetreten ist. Die Anlagefläche 30 ist dabei bevorzugt als ebene Fläche ausgebildet, so dass mittels der Anlagefläche 30 die erforderlichen Messungen an der Laufschaufeleinheit 10 bzw. der Laufschaufel 12 durchgeführt werden können. Die Anlagefläche 30 weist insbesondere nach einer Reinigung bzw. eventuellen Nachbearbeitung keine aufgrund des Betriebs entstandenen Verformungen, Ablagerungen oder dergleichen auf.

Im Rahmen von Wartungsarbeiten ist es auch denkbar, dass bereits vorhandene Anlageflächen, beispielsweise an der Hinterseite des Außendeckbandes der Laufschaufeleinheit, belassen werden, und eine neue Anlage- bzw. Referenzfläche gemäß dem vorgeschlagenen Verfahren, insbesondere an der Vorderseite des Außendeckbandes geschaffen wird.

### Bezugszeichenliste

- 10: Laufschaufeleinheit
- 12: Laufschaufel
- 14: Außendeckband
- 16: Druckseite
- 18: Vorderkante
- 20: Hinterkante
- 22: Übergangsbereich
- 24: Übergangsbereich
- 26: Vorderseite
- 28: Hinterseite
- 30: Anlagefläche
- 30a: Anlagefläche
- 32: Stufe
- AB1: Abstand
- AB2: Abstand
- AR: Axialrichtung
- RR: Radialrichtung
- UR: Umfangsrichtung
- LA: Längsachse der Laufschaufeleinheit 10

## Patentansprüche

1. Verfahren zur Prüfung einer Laufschaufeleinheit (10) einer Gasturbine, wobei die Laufschaufeleinheit (10) ein radial außen angeordnetes Außendeckband (14) umfasst, das materialschlüssig mit einer sich radial nach innen anschließenden Laufschaufel (12) verbunden ist, wobei die Laufschaufel (12) einen Strömungsquerschnitt aufweist mit einer Druckseite (16) und einer Saugseite, sowie mit einer axialen Vorderkante (18) und einer axialen Hinterkante (20), welche die Druckseite (16) und die Saugseite miteinander verbinden, wobei das Verfahren den folgenden Schritt umfasst:
Bereitstellen einer Laufschaufeleinheit (10);
**gekennzeichnet durch** die Schritte:
Bearbeiten des Außendeckbandes (14) an seiner axial vorderen oder axial hinteren Seite (26, 28), wobei zur Bearbeitung diejenige Seite (26, 28) ausgewählt wird, welche zu der benachbarten axialen Vorderkante (18) oder axialen Hinterkante (20) der Laufschaufel (10) den größeren Abstand (AB1, AB2) aufweist, wobei durch die Bearbeitung der ausgewählten Seite (26) eine Anlagefläche (30) derart erzeugt wird, dass die Laufschaufeleinheit in einer Messvorrichtung referenziert positionierbar ist;
Positionieren der Laufschaufeleinheit (10) mit der Anlagefläche (30) in einer Messvorrichtung, die dazu eingerichtet ist, eine Biegung oder Verdrehung der Laufschaufeleinheit (10) um ihre Fädelachse oder ihre Längsachse (LA) zu bestimmen.

2. Verfahren nach Anspruch 1, wobei die Anlagefläche (30) an der axial vorderen Seite (26) des Außendeckbandes (14) erzeugt wird.

3. Verfahren nach Anspruch 1, wobei das Bearbeiten des Außendeckbandes (14) durch ein spanendes Verfahren, insbesondere Fräsen oder Schleifen, durchgeführt wird.

4. Verfahren nach Anspruch 1 oder 2, wobei das Bearbeiten des Außendeckbandes (14) so durchgeführt wird, dass die Anlagefläche (30) in axialer Richtung (AR) einen Abstand von der axialen Vorderkante (18) der Laufschaufel (12) aufweist.

5. Verfahren nach einem der vorhergehenden Ansprüche, wobei die nicht ausgewählte Seite (28) des Außendeckbands (14) unbearbeitet bleibt.

6. Verfahren nach einem der vorhergehenden Ansprüche, wobei es bei der Herstellung einer Gasturbine oder/und bei der Wartung einer Gasturbine eingesetzt wird.

7. Laufschaufeleinheit mit einem radial außen angeordneten Außendeckband (14), das materialschlüssig mit einer sich radial nach innen anschließenden Laufschaufel (12) verbunden ist, wobei die Laufschaufel (12) einen Strömungsquerschnitt aufweist mit einer Druckseite (16) und einer Saugseite, sowie mit einer axialen Vorderkante (18) und einer axialen Hinterkante (20), welche die Druckseite (16) und die Saugseite miteinander verbinden, **dadurch gekennzeichnet, dass** das Außendeckband (14) an seiner axial vorderen oder axial hinteren Seite (26, 28) eine durch spanende Bearbeitung erzeugte Anlagefläche (30) derart aufweist, das die Laufschaufeleinheit in einer Messvorrichtung referenziert positionierbar ist, wobei die Anlagefläche (30) an derjenigen Seite (26) ausgebildet ist, welche von einer benachbarten axialen Vorderkante (18) oder axialen Hinterkante (20) der Laufschaufel (12) den größeren Abstand (AB1, AB2) aufweist.

8. Laufschaufeleinheit nach Anspruch 7, **dadurch gekennzeichnet, dass** die Anlagefläche (30) in der axial vorderen Seite (26) des Außendeckbandes (14) ausgebildet ist.

9. Laufschaufeleinheit nach Anspruch 7 oder 8, **dadurch gekennzeichnet, dass** die Laufschaufel (12) radial innen mit einem Fußabschnitt verbunden ist, insbesondere materialschlüssig verbunden ist, wobei der Fußabschnitt vorzugweise als Tannenbaumfuß ausgebildet ist, und wobei der Fußabschnitt dazu eingerichtet ist, die Laufschaufeleinheit mit einer Rotorscheibe der Gasturbine zu verbinden.

10. Gasturbine, insbesondere Fluggasturbine mit wenigstens einer Verdichterstufe und wenigstens einer Turbinenstufe, wobei die Turbinenstufe einen Turbinenrotor mit mehreren in Umfangsrichtung nebeneinander angeordneten Laufschaufeleinheiten aufweist, und wobei die Verdichterstufe einen Verdichterrotor mit mehreren in Umfangrichtung nebeneinander angeordneten Laufschaufeleinheiten aufwiest, **dadurch gekennzeichnet, dass** der Turbinenrotor oder/und der Verdichterrotor wenigstens eine Laufschaufeleinheit (10) nach den Ansprüchen 7 bis 9 umfasst.

## Claims

1. Method for testing a rotor blade unit (10) of a gas turbine, the rotor blade unit (10) comprising a radially outwardly arranged outer shroud (14) which is integrally bonded to a radially inwardly adjoining rotor blade (12), the rotor blade (12) having a flow cross section comprising a pressure side (16) and a suction side, and having an axial leading edge (18) and an axial trailing edge (20) which connect the pressure side (16) and the suction side to one another, the method comprising the following steps:
providing a rotor blade unit (10);
**characterized by** the following steps:
machining the outer shroud (14) on its axially leading or axially trailing side (26, 28), the side (26, 28) that is selected for machining being that which is at the greater distance (AB1, AB2) from the adjacent axial leading edge (18) or axial trailing edge (20) of the rotor blade (10), a contact surface (30) being generated by the machining of the selected side (26) in such a way that the rotor blade unit can be positioned in a measuring device in a referenced manner;
positioning the rotor blade unit (10) comprising the bearing surface (30) in a measuring device which is designed to determine a bend or twist of the rotor blade unit (10) about its thread axis or its longitudinal axis (LA).

2. Method according to claim 1, wherein the contact surface (30) is produced on the axially frontal side (26) of the outer shroud (14).

3. Method according to claim 1, wherein the outer shroud (14) is machined by a machining method, in particular milling or grinding.

4. Method according to either claim 1 or claim 2, wherein the outer shroud (14) is machined in such a way that the contact surface (30) is at a distance from the axial leading edge (18) of the rotor blade (12) in the axial direction (AR).

5. Method according to any of the preceding claims, wherein the unselected side (28) of the outer shroud (14) remains unmachined.

6. Method according to any of the preceding claims, wherein the method is used in the manufacture of a gas turbine and/or in the maintenance of a gas turbine.

7. Rotor blade unit comprising a radially outwardly arranged outer shroud (14) which is integrally bonded to a radially inwardly adjoining rotor blade (12), the rotor blade (12) having a flow cross section which comprises a pressure side (16) and a suction side, and has an axial leading edge (18) and an axial trailing edge (20), which connect the pressure side (16) and the suction side to one another, **characterized in that** the outer shroud (14) has a contact surface (30), generated by machining, on its axially leading or axially trailing side (26, 28), such that the rotor blade unit can be positioned in a measuring device in a referenced manner, the contact surface (30) being arranged on the side (26) that is at the greatest distance (AB1, AB2) from an adjacent axial leading edge (18) or axial trailing edge (20) of the rotor blade (12).

8. Rotor blade unit according to claim 7, **characterized in that** the contact surface (30) is formed on the axially leading side (26) of the outer shroud (14).

9. Rotor blade unit according to either claim 7 or claim 8, **characterized in that** the rotor blade (12) is connected radially inwardly to a root portion, in particular integrally bonded, the root portion preferably being formed as a fir-tree root, and the root portion being designed to connect the rotor blade unit to a rotor disc of the gas turbine.

10. Gas turbine, in particular an aircraft gas turbine, which has at least one compressor stage and at least one turbine stage, the turbine stage having a turbine rotor which has a plurality of rotor blade units arranged next to one another in the circumferential direction, and the compressor stage having a compressor rotor which has a plurality of rotor blade units arranged next to one another in the circumferential direction, **characterized in that** the turbine rotor or/and the compressor rotor comprises at least one rotor blade unit (10) according to claims 7 to 9.

## Revendications

1. Procédé destiné à tester une unité d'aube rotorique (10) d'une turbine à gaz, l'unité d'aube mobile (10) comprenant une bande de recouvrement extérieure (14) disposée radialement vers l'extérieur, qui est fixée par liaison de matière à une aube rotorique (12) se raccordant radialement vers l'intérieur, l'aube rotorique (12) présentant une section d'écoulement comportant un côté refoulement (16) et un côté aspiration ainsi qu'un bord avant axial (18) et un bord arrière axial (20) fixant le côté refoulement (16) et le côté aspiration ensemble, le procédé comprenant l'étape suivante :
fourniture d'une unité d'aube rotorique (10) ;
**caractérisé par** les étapes :
d'usinage de la bande de recouvrement extérieure (14) sur son côté axialement avant ou axialement arrière (26, 28), le côté (26, 28) sélectionné pour usinage étant celui qui présente la plus grande distance (AB1, AB2) par rapport au bord axial avant (18) ou au bord axial arrière (20) adjacent de l'aube rotorique (10), une surface de support (30) étant créée par l'usinage du côté sélectionné (26), de sorte que l'unité d'aube rotorique peut être positionnée de manière référencée dans un dispositif de mesure ;
de positionnement de l'unité d'aube rotorique (10) par la surface de support (30) dans un dispositif de mesure qui est configuré pour déterminer une courbure ou une torsion de l'unité d'aube rotorique (10) autour de son axe de filetage ou de son axe longitudinal (LA).

2. Procédé selon la revendication 1, dans lequel la surface de support (30) est réalisée sur le côté avant axial (26) de la bande de recouvrement extérieure (14).

3. Procédé selon la revendication 1, dans lequel la bande de recouvrement extérieure (14) est usinée par un procédé d'usinage, en particulier par fraisage ou par meulage.

4. Procédé selon la revendication 1 ou 2, dans lequel la bande de recouvrement extérieure (14) est usinée de sorte que la surface de support (30) se trouve à une distance du bord avant axial (18) de l'aube rotorique (12) dans la direction axiale (AR).

5. Procédé selon l'une des revendications précédentes, dans lequel le côté non sélectionné (28) de la bande de recouvrement extérieure (14) demeure non usiné.

6. Procédé selon l'une des revendications précédentes, **caractérisé en ce qu'**il est utilisé pour la fabrication d'une turbine à gaz et/ou pour la maintenance d'une turbine à gaz.

7. Unité d'aube rotorique comportant une bande de recouvrement extérieure (14) disposée radialement vers l'extérieur, qui est fixée par liaison de matière à une aube rotorique (12) se raccordant radialement vers l'intérieur, l'aube rotorique (12) présentant une section d'écoulement comportant un côté refoulement (16) et un côté aspiration ainsi qu'un bord avant axial (18) et un bord arrière axial (20) fixant le côté refoulement (16) et le côté aspiration ensemble, **caractérisée en ce que** la bande de recouvrement extérieure (14) présente, sur son côté axialement avant ou axialement arrière (26, 28), une surface de support (30) produite par usinage, de sorte que l'unité d'aube rotorique peut être positionnée de manière référencée dans un dispositif de mesure, la surface de support (30) étant formée sur le côté (26) qui présente la plus grande distance (AB1, AB2) par rapport à un côté adjacent axial avant (18) ou axial arrière (20) de l'aube rotorique (12).

8. Unité d'aube rotorique selon la revendication 7, **caractérisée en ce que** la surface de support (30) est formée sur le côté avant axial (26) de la bande de recouvrement extérieure (14).

9. Unité d'aube rotorique selon la revendication 7 ou 8, **caractérisée en ce que** l'aube rotorique (12) est fixée radialement à l'intérieur d'une partie inférieure, en particulier est fixée par liaison de matière, la partie inférieure étant de préférence réalisée sous forme de pied de sapin, et la partie inférieure étant conçue pour fixer l'unité d'aube rotorique à un disque de rotor de la turbine à gaz.

10. Turbine à gaz, en particulier turbine à gaz d'avion comportant au moins un étage de compresseur et au moins un étage de turbine, l'étage de turbine présentant un rotor de turbine doté de plusieurs unités d'aube rotoriques disposées les unes à côté des autres dans la direction périphérique, et l'étage de compresseur présentant un rotor de compresseur doté de plusieurs unités d'aube rotoriques disposées les unes à côté des autres dans la direction périphérique, **caractérisée en ce que** le rotor de turbine et/ou le rotor de compresseur comprend au moins une unité d'aube rotorique (10) selon les revendications 7 à 9.
